# EUROPÄISCHE PATENTSCHRIFT

(11) **EP 4 033 861 B1**
(45) Veröffentlichungstag und Bekanntmachung des Hinweises auf die Patenterteilung: **04.01.2023**
(21) Anmeldenummer: 21204686.6
(22) Anmeldetag: 26.10.2021
(51) Int. Cl.: H05B 6/64, F24C 15/00

(54) **MIKROWELLENGARGERÄT MIT ADAPTIERTER LED-LEUCHTE**
MICROWAVE COOKING DEVICE WITH ADAPTED LED LIGHTING
APPAREIL DE CUISSON À MICRO-ONDES POURVU D'ÉCLAIRAGE À DEL ADAPTÉ

(30) Priorität: 26.01.2021 DE 102021101700
(43) Veröffentlichungstag der Anmeldung: 27.07.2022
(73) Patentinhaber: BJB GmbH & Co. KG, 59755 Arnsberg (DE)
(72) Erfinder: Henrici, Philipp, 59755 Arnsberg (DE); Baumeister, Olaf, 59846 Sundern (DE); Welslau, Frank, 59757 Arnsberg (DE)
(74) Vertreter: Ostriga Sonnet Wirths & Vorwerk

(56) Entgegenhaltungen:
- WO-A1-2020/043359
- CN-U- 209 932 464
- DE-A1-102014 203 532
- DE-B1- 2 937 499
- DE-U1-202019 106 170

## Beschreibung

Die Erfindung betrifft ein Mikrowellengargerät,
- mit einem Garraum, der von einer Garraumwandung umgrenzt ist,
- mit einer Gargeräteleuchte,
- mit einer Öffnung in der Garraumwandung, in welcher die Gargeräteleuchte gehalten ist,
- mit einer Abschirmung im Bereich der Öffnung, die den Austritt von Mikrowellen aus dem Garraum durch die Öffnung verhindert, wobei
- die Gargeräteleuchte eine LED-Lichtquelle und einen Lichtleitstab aufweist, welcher das von der LED-Lichtquelle emittierte Licht in den Garraum einspeist,
- die Gargeräteleuchte eine Halteplatte aufweist, die mit einer Ausnehmung versehen ist, in welcher der Lichtleitstab der Gargeräteleuchte einsitzt,
- die Halteplatte ein den Lichtleitstab umgebendes Hülsenbauteil hält,
- die Halteplatte die Öffnung abdeckend an der Garraumwandung angeordnet ist.

Gargeräte sind aus dem Stand der Technik in Form von Backöfen, Dampfgarern, Mikrowellen oder sonstigen Geräten für den Privathaushalt oder gewerbliche Anwendungszwecke hinlänglich bekannt. Sie dienen der Zubereitung von Speisen und weisen hierfür einen Garraum auf, der von der sogenannten Muffel und ihren Wänden, also den Muffelwänden bzw. Garraumwänden gebildet ist.

Um den Garvorgang beobachten und begutachten zu können, verfügen Gargeräte über eine Beleuchtung wie sie beispielsweise in der anmeldereigenen DE 50 2006 001 187 beschrieben ist. Solche Leuchten sitzen in Durchbrüchen der Garraumwandung ein, die bei der Fertigung der Muffel in die Garraumwand eingebracht werden.

Die Muffel ist ein in der Regel mehrteiliges, aus Metall gefertigtes Bauteil. Dabei werden die Muffelteile in Pressen aus Metallblechen geformt.

Die Werkzeuge und Anlagen zum Herstellen der Muffelteile sind sehr kostspielig, so dass Hersteller von Gargeräten bemüht sind, die Werkzeuge ausreichend auszulasten und verschiedene Gerätetypen und Gerätemodelle unter Nutzung der gleichen Muffel herzustellen.

Die Fortentwicklung der Beleuchtungstechnik führt zu einem vermehrten Einsatz von auf LED-Modulen basierender Gargeräteleuchten, die ein hohes Energieeinsparpotential bieten und damit die Energieeffizienz von Gargeräten verbessern. Jedoch führen spezifische Anforderungen der LED-Lichttechnik zu vollkommen neuen Gargeräteleuchten, die abweichende Bauformen, Einbaumaße und Anordnungserfordernisse im Gargerät haben. Insbesondere die Temperaturempfindlichkeit der LED-Lichtquelle führt dazu, dass diese in einer erheblich größeren Entfernung vom Garraum angeordnet werden muss und das emittierte Licht häufig durch einen Lichtleiter in den Garraum eingespeist wird.

So zeigt die DE 10 2014 203 532 A1 ein Mikrowellengerät, welches über einen an einen Träger angeschweißten Hohlkörper eine Einführöffnung für einen Lichtleiter einer LED-Leuchte bereitstellt. Gleichzeitig dient der Träger auch als Mikrowellenfalle.

Die WO 2020/043359 A1 zeigt eine Halterung für einen Lichtleiter im Innenraum eines Gargeräts, welcher eine Beschädigung des Lichtleiters während des Transports vermeiden soll.

Die DE 29 37 499 B1 zeigt schließlich eine hülsenförmige Halterung für eine Beleuchtungseinrichtung eines Mikrowellenherdes, in welche eine herkömmliche elektrische Glühlampe eingesetzt wird.

Für den Einsatz von auf LED-Technik basierenden Gargeräteleuchten sind Ofenmuffeln mit angepassten Wandöffnungen zum Einspeisen von Licht in den Garraum zu entwickeln und bestehende Produktionswerkzeuge anzupassen oder zu ersetzen . Dies ist sowohl in wirtschaftlicher Hinsicht als auch unter Nachhaltigkeitsgesichtspunkten nachteilig.

Aufgabe der Erfindung ist es deshalb, ein Mikrowellengargerät mit einer für die Nutzung herkömmlicher Leuchten ausgestalteten Öffnung in der Garraumwandung mit einer auf LED-Technik basierenden Gargeräteleuchte auszurüsten.

Gelöst wird die Aufgabe von einem Mikrowellengargerät mit den Merkmalen des Anspruchs 1, insbesondere mit den kennzeichnenden Merkmalen, wonach das Hülsenbauteil als separates Bauteil ausgebildet ist sowie einen Auflageflansch und einen gekröpften Befestigungsfuß aufweist und die Halteplatte einen Aufnahmeschlitz ausbildet, durch den der Befestigungsfuß des Hülsenbauteils hindurchgeführt ist und auf einer dem Auflageflansch abgewandten Seite die Halteplatte hintergreift.

Dabei weist die Öffnung in der Garraumwandung ein erstes Öffnungsmaß auf, die Ausnehmung der Halteplatte weist hingegen ein zweites Öffnungsmaß auf, welches gegenüber dem ersten Öffnungsmaß verringert ist.

Die Erfindung zeichnet sich insbesondere durch die wie oben definierte Halteplatte aus, welche die durch die Öffnung in der Garraumwandung definierte Befestigungskontur und Befestigungslage für die Verwendung eines LED-Leuchtmittels adaptiert. Auf diese Weise ist weder eine Anpassung der Garraumwandung als Teil der Muffel an moderne, LED basierte Gargeräteleuchten erforderlich, noch muss Aufwand betrieben werden, um im Hinblick auf die Vorteilhaftigkeit der LED-Technik entwickelte Gargeräteleuchte umzukonstruieren, um diese an bestehende, für herkömmliche Leuchten angepasste Gargerätewandungen anzupassen.

Die erfindungsgemäße Halteplatte erlaubt es also auf bestehender, herkömmlicher Technik beruhende Bauteile und für die Herstellung solcher Bauteile vorgesehene Produktionswerkzeuge weiterzuwenden, bis aufgrund beispielsweise von Werkzeugverschleiß eine Werkzeugneuanschaffung erforderlich und damit auch eine Werkzeugänderung möglich ist. Gleichzeitig können bereits an neue Anforderungen angepasste Leuchtmittel ohne Konstruktionsänderung weiterverwendet werden. Die Halteplatte erlaubt somit eine bruchlose Transition, also einen sanften Übergang, von althergebrachter Technik zu neuer Technik.

Darüber hinaus verhindert das den Lichtleitstab umgebende Hülsenbauteil den Austritt von Mikrowellenstrahlung aus dem Garraum und hat so die Funktion einer Mikrowellenfalle.

Die Halteplatte kann auf verschiedene Weise die Öffnung der Garraumwandung verschließend befestigt werden. So ist eine Schraubverbindung ebenso möglich, wie eine Klemm- oder Rastverbindung. Die Art und Weise der Befestigung orientiert sich insbesondere an der Befestigungsart, die für die in der Öffnung bislang vorgesehene, herkömmliche Gargeräteleuchte vorgesehen war. Häufig handelt es sich hierbei um Rastflügel, die beim Eintauchen bzw. Durchtauchen durch die Öffnung an den Öffnungsrändern abgleiten und rückstellelastisch gestaucht werden, sich nach dem Durchtauchen der Öffnung jedoch ausstellen und die Garraumwandung zwischen sich und der Halteplatte aufnehmen, die Garraumwandung also hintergreifen. Erfindungsgemäß ist das Hülsenbauteil als separates Bauteil ausgebildet und weist insbesondere einen Auflageflansch und einen gekröpften Befestigungsfuß auf.

Das Hülsenbauteil als separates Bauteil auszubilden hat den wesentlichen Vorteil, dass ein modulares System entsteht. So kann ein und dasselbe Hülsenbauteil für die Anordnung auf unterschiedlichen, an die jeweiligen Gegebenheiten der für herkömmliche Leuchtmittel vorgesehenen Öffnung der Garraumwandung angepasste Halteplatten verwendet werden. Außerdem kann auf unterschiedliche Materialien für die Herstellung der Halteplatte und des Hülsenbauteils zurückgegriffen werden. Schließlich lassen sich die Abmessungen des Hülsenbauteils an die Abschirmung der Mikrowellenstrahlung anpassen, was beim Umformen von Abschnitten der Halteplatte nur eingeschränkt möglich ist.

Bei der Erfindung ist vorgesehen, dass die Halteplatte einen Aufnahmeschlitz ausbildet, durch den der Befestigungsfuß des Hülsenbauteils hindurchgeführt ist und auf einer dem Auflageflansch abgewandten Seite die Halteplatte hintergreift.

Der Befestigungsfuß erlaubt eine einfache Festlegung des Hülsenbauteils an der Halteplatte, insbesondere, wenn zusätzlich ein weiteres Befestigungsmittel vorgesehen ist, welches gemeinsam mit dem Haltefuß das Hülsenbauteil an der Halteplatte festlegt. Hier eignen sich besonders Rastelemente, die in entsprechende Rastöffnungen der Halteplatte eintauchen. Eine Nietverbindung wie auch einer Schraubverbindung ist jedoch ebenfalls möglich.

Bei einer bevorzugten Ausführungsform ist die Halteplatte aus einem Blech gebildet.

Zwischen Hülsenbauteil und Lichtleitstab besteht ein Ringspalt, der Montagezwecken sowie unterschiedlichen Ausdehnungskoeffizienten geschuldet ist. Um das Austreten von Wrasen aus dem Garraum entlang des Ringspalts zwischen Lichtleitstab und Hülsenbauteil zu verhindern, ist vorgesehen, dass entweder die Halteplatte oder das Hülsenbauteil selbst mit einem Dichtelement versehen sind, welches den Ringspalt schließt. Das Dichtelemente kann darüber hinaus auch eine die Gargeräteleuchte an der Garraumwandung haltende Funktion haben, insbesondere, wenn das Dichtelement unelastisch ist, wie beispielsweise ein in einer keramischen Halterung eingelassener Graphitring. Es ist jedoch auch möglich, eine solche Halterung mit einem entsprechend ausgebildeten Elastomerdichtelement zu schaffen.

Das Hülsenbauteil kann eine durchbrochene Hülsenwand aufweisen, also als Lochblech oder Gitternetzschlauch ausgebildet sein, und dennoch seine Funktion als Mikrowellenfalle erfüllen.

Weitere Vorteile der Erfindung sowie ein besseres Verständnis derselben zeigt die nachfolgende Beschreibung eines Ausführungsbeispiels auf. Es zeigen:
- Fig. 1: die erfindungsgemäße Anordnung einer Gargeräteleuchte in der teilweise dargestellten Garraumwandung eines Mikrowellengerätes in Explosionsansicht,
- Fig. 2: die Anordnung gemäß Fig. 1 in zusammengesetzter Form in Seitenansicht,
- Fig. 3: eine Schnittdarstellung gemäß Schnittlinie III-III in Fig. 2,
- Fig. 4: eine Ausschnittsvergrößerung gemäß Ausschnittskreis IV in Fig. 3,
- Fig. 5: eine Ansicht auf Halteplatte und Hülsenbauteil auf die dem Garraum abgewandte Seite und
- Fig. 6: eine Ansicht von Halteplatte und Hülsenbauteil auf die dem Garraum zugewandte Seite.

In den Figuren ist die Anordnung einer Gargeräteleuchte 12 in einem Abschnitt einer Garraumwandung 11 insgesamt mit der Bezugsziffer 10 bezeichnet.

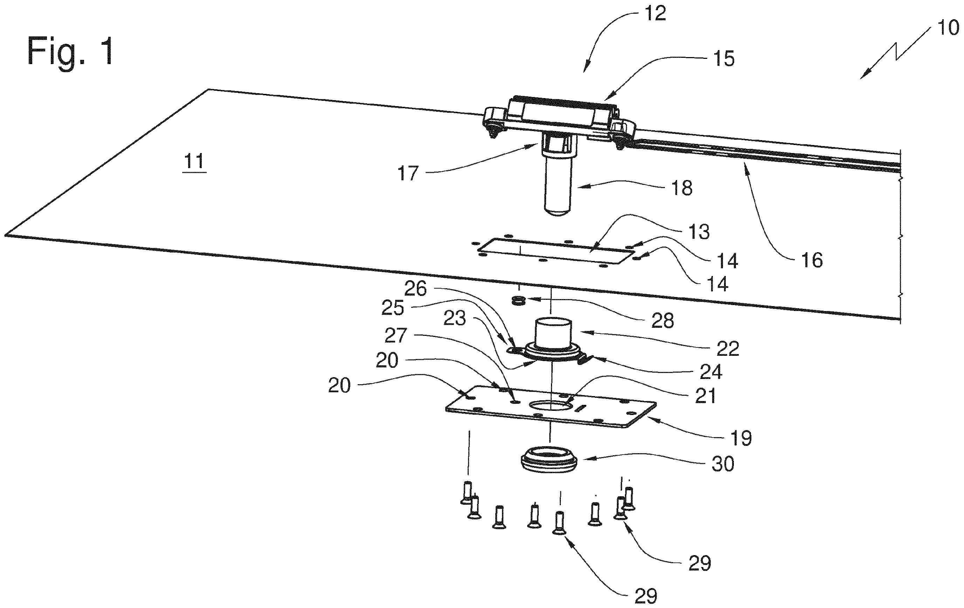

In Figur 1 ist die Anordnung 10 in Explosionsdarstellung gezeigt. Die Garraumwandung 11 verfügt über eine Öffnung 13, die für eine Gargeräteleuchte herkömmlicher Bauart, d.h. unter Verwendung von Reflektoren und beispielsweise Halogenlampen vorgesehen ist und von einer Reihe Gewindebohrungen 14 umgeben ist.

Eine insgesamt mit der Bezugsziffer 12 versehene Gargeräteleuchte umfasst zunächst ein Fassungsteil 15, welche eine nicht weiter dargestellte LED-Lichtquelle hält, mit Anschlussleitern 16 verbunden ist und sodann einen Haltekragen 17 zur Befestigung eines Lichtleitstabs 18 ausbildet.

Eine Halteplatte 19 ist mit Durchgangsbohrungen 20 versehen und von den Abmessungen her so beschaffen, dass sie die Öffnung 13 der Garraumwandung 11 abdeckt. Dabei fluchten die Durchgangsbohrungen 20 der Halteplatte 19 mit den Gewindebohrungen 14 der Garraumwandung 11.

Die Halteplatte 19 verfügt ihrerseits über eine Ausnehmung 21, die der Durchführung des Lichtleitstabs 18 dient und eine Elastomerdichtung 30, also ein Dichtelement, aufnimmt. Sodann ist auf der dem Garraum abgewandten Seite der Halteplatte 19 ein Hülsenbauteil 22 angeordnet, welches den Lichtleitstab 18 aufzunehmen in der Lage ist.

Das Hülsenbauteil 22 weist an seinem zur Halteplatte 19 weisenden Ende einen Auflageflansch 23 auf, welcher einen Befestigungsfuß 24 und diametral zum Befestigungsfuß 24 gegenüberliegend eine Haltenase 25 trägt. Die Haltenase 25 ist mit einer ersten Nietbohrung 26 versehen, die mit einer halteplattenseitigen zweiten Nietbohrung 27 fluchtet. Die Nietbohrungen 26, 27 können von einem Befestigungsniet 28 durchsetzt werden, um das Hülsenbauteil 22 an der Halteplatte 19 festzulegen.

Befestigungsschrauben 29 durchsetzen die Durchgangsbohrungen 20 der Halteplatte 19 und greifen in die Gewindebohrungen 14 der Garraumwandung 11 ein, um die Halteplatte 19 an der Garraumwandung 11 zu befestigen.

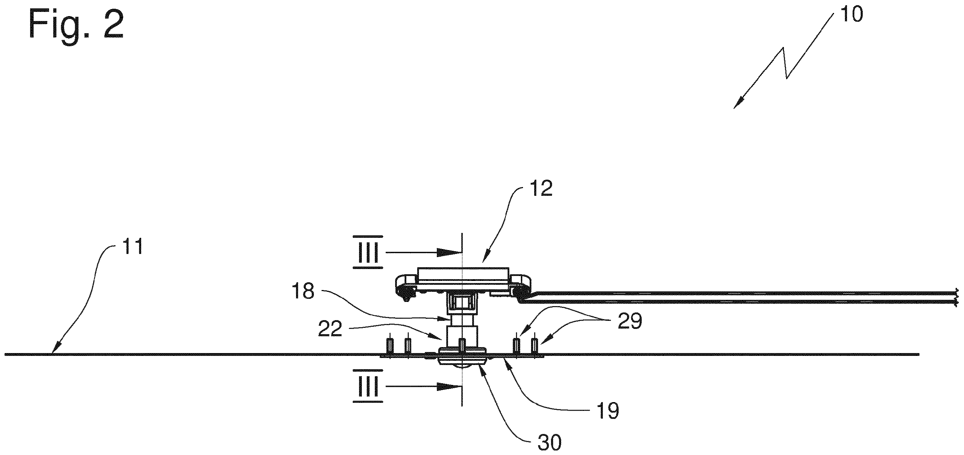

Der vorbeschriebene Sachverhalt ist insbesondere auch an der Figur 2 zu erkennen, die eine Seitenansicht auf die Anordnung 10 zeigt, in welcher die in Figur 1 explosionsartig dargestellten Bauteile zusammengesetzt sind.

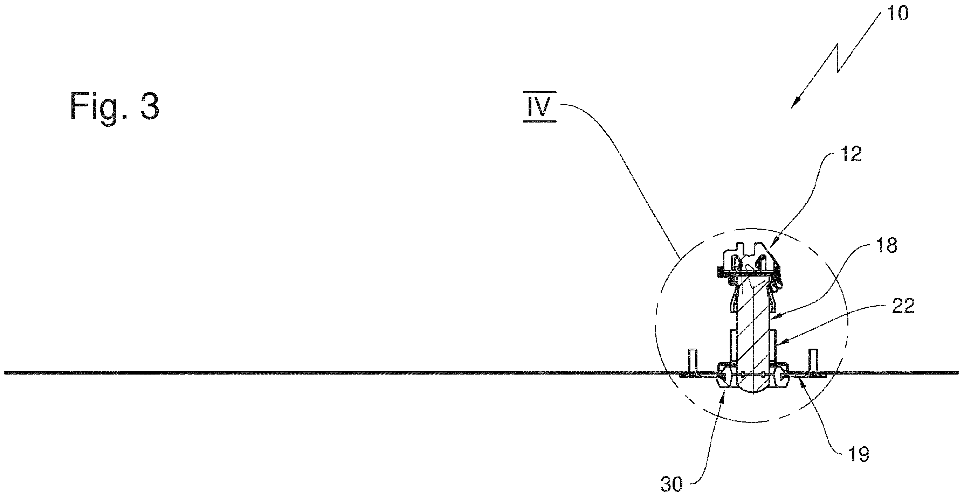

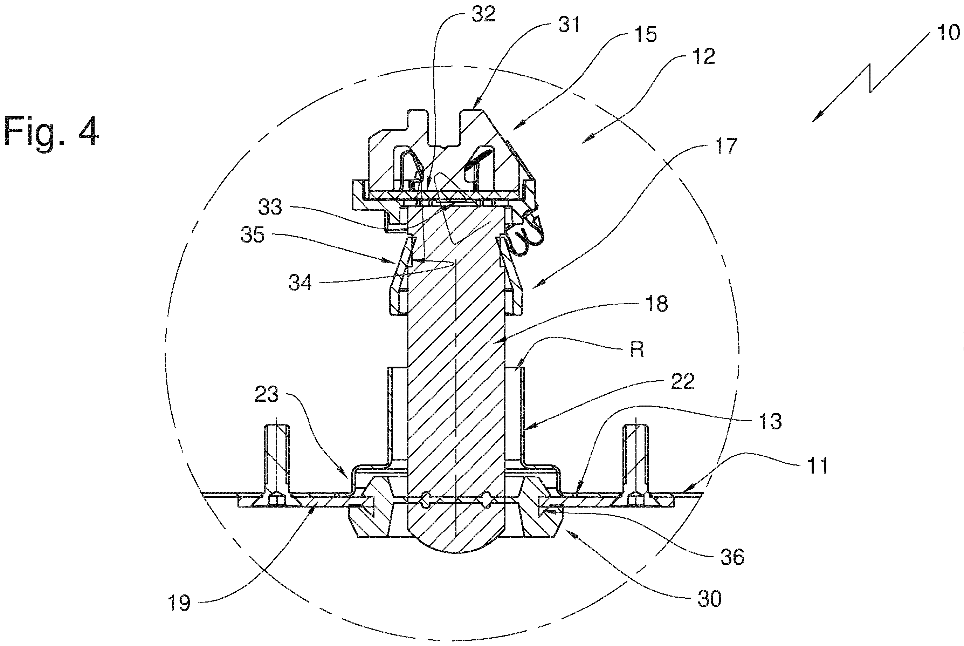

Figur 4 zeigt die Anordnung 10 noch einmal in zusammengesetzter Form in einer Ausschnittsvergrößerung gemäß Ausschnittskreis IV in Figur 3. Figur 3 selbst ist eine Schnittdarstellung gemäß Schnittlinie III-III in Figur 2.

Der Figur 4 ist zunächst zu entnehmen, dass das Fassungsteil 15 einen Kühlkörper 31 umfasst, auf welchem eine Platine 32 befestigt ist, welche mit einem LED-Modul 33 versehen ist, welches die Lichtquelle der Gargeräteleuchte 12 bildet und welchem der Lichtleitstab 18 in Lichtaustrittsrichtung nachgeordnet ist. So kann dieser das von dem LED-Modul 33 emittierte Licht aufnehmen und dem Garraum zuführen.

Der Lichtleitstab 18 verfügt seinerseits über eine Rastnut 34 nahe seines LED-modulseitigen Endes, in welche Rastflügel 35 eingreifen, die vom Haltekragen 17 ausgebildet werden.

Der Lichtleitstab 18 sitzt in Elastomerdichtung 30 ein. Der Lichtleitstab 18 befindet sich darüber hinaus in der Öffnung 13 der Garraumwandung 11. Dabei ist darauf hinzuweisen, dass die Öffnung 13 in der vorliegenden Darstellung lediglich als schmaler Spalt zwischen der Garraumwandung 11 und dem Hülsenbauteil 22 zu erkennen ist, was der gewählten Schnittebene geschuldet ist.

Die Elastomerdichtung 30 dichtet den Ringspalt R zwischen dem Hülsenbauteil 22 und dem Lichtleitstab 18 gegen das Austreten Gardünsten aus dem Garraum ab. In der vorliegenden Ausführungsform greift die Elastomerdichtung 30 mit einer Haltenut 36 in die Randbereiche der Ausnehmung 21 der Halteplatte 19. Eine Anordnung der Elastomerdichtung 30 am Hülsenbauteil 22 selbst ist in einer nicht dargestellten, alternativen Ausführungsform ebenso denkbar.

Figur 4 erlaubt es dem Fachmann, sich ohne weiteres vergleichsweise unflexible Dichtung in Form beispielsweise eines Graphitrings vorzustellen, welcher am Hülsenbauteil 22 oder an der Halteplatte 19 festgelegt ist und einen zur Abstützung des Lichtleitstabs 18 ausreichende Axialerstreckung aufweist. Ein solchermaßen ausgestalteter Dichtring ist ohne weiteres in der Lage, nicht nur den Ringspalt R zu verschließen, sondern auch die Gargeräteleuchte 12 insgesamt zu halten, so dass es nicht zwingend einer weiteren Befestigung der Gargeräteleuchte 12 am Gargerät bedarf.

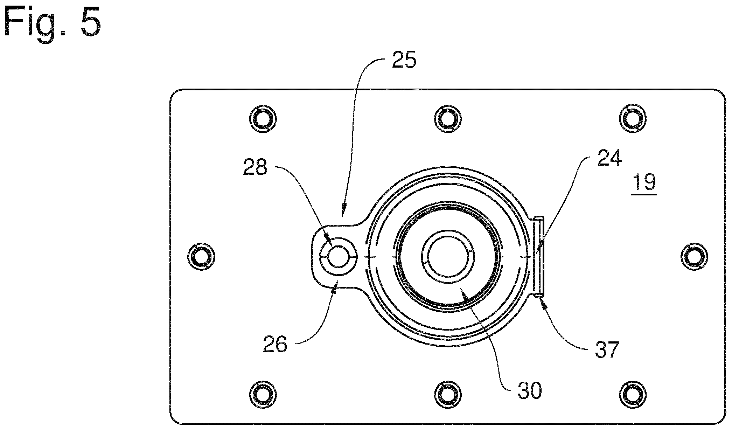

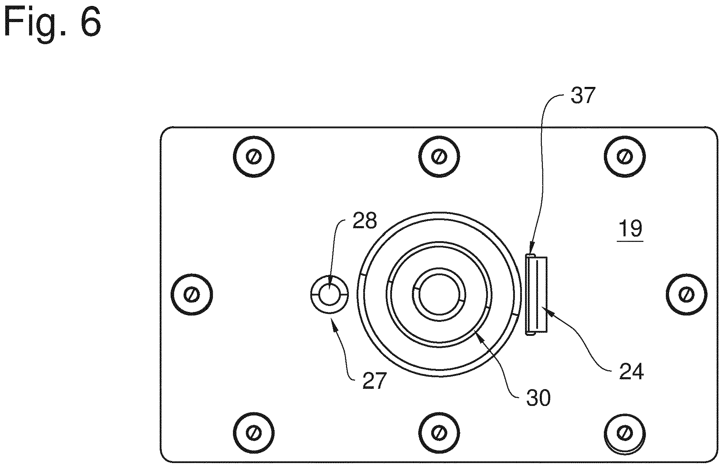

Ein besseres Verständnis der Befestigung des Hülsenbauteils 22 an der Halteplatte 19 erwächst aus den Darstellungen der Figuren 5 und 6, welche die Halteplatte von oben (Garraum abgewandte Seite, Figur 5) und von unten (dem Garraum zugewandte Seite, Figur 6) zeigen. Auf eine Darstellung des Lichtleitstabs 18 wurde verzichtet.

Die Figuren 5 und 6 zeigen zunächst, dass die Halteplatte 19 mit einem Befestigungsschlitz 37 versehen ist, durch welchen der Befestigungsfuß 24 hindurchtaucht und so auf der im Auflageflansch 23 des Hülsenbauteils 22 gegenüberliegenden Seite der Halteplatte 19 austritt. Der Befestigungsfuß 24 des Hülsenbauteils 22 liegt mit seinem Ende an der Halteplatte 19 an.

Die Haltenase 25 des Hülsenbauteils 22 fluchtet mit ihrer ersten Nietbohrung 26 mit der zweiten Nietbohrung 27 der Halteplatte 19, wobei der Befestigungsniet 28 beide Nietbohrungen 26, 27 durchsetzt, um so gemeinsam mit dem Befestigungsfuß 24 das Hülsenbauteil 22 sicher an der Halteplatte 19 zu befestigen. Sichtbar ist in den Figuren 5 und 6 zudem die Elastomerdichtung 30, die jedoch keinerlei Funktion im Hinblick auf die Festlegung des Hülsenbauteils an der Halteplatte 19 hat.

Die Erfindung zeigt, wie eine Garraumwandung 11 mit einer Öffnung 13 zur Verankerung herkömmlicher Garraumleuchten mit beispielsweise Halogen- oder Glühwendellampen, durch Nutzung einer adaptierenden Halteplatte 19 mit einer auf moderner LED-Technik basierenden Gargeräteleuchte 12 versehen werden kann. Insbesondere Gargeräteleuchten 12 mit Lichtleitstab 18 benötigen zum Einspeisen des Lichtes in den Garraum lediglich kleine Öffnungen in der Garraumwandung 11. Die Halteplatte 19 vermindert den Durchmesser der Öffnung 13 entsprechend auf ein für die Einführung des Lichtleitstabs 18 geeignetes Maß. Bei der Halteplatte 19 handelt es sich folglich um eine Adapterplatte. Dank dieser ist es möglich, bestehende Formen und Werkzeuge zur Herstellung von Garräumen weiter zu nutzen und dennoch LED-Leuchten zu verwenden. Letztere müssen in ihrer Bauart und Bauform an bestehende Gegebenheiten nicht angepasst werden.

Dabei ist es ein Kerngedanke der Erfindung, eine geeignete Zuführung für den Lichtleitstab 18 bereitzustellen, indem eine überdimensioniert große Öffnung 13 in der Garraumwandung 11 durch Nutzung insbesondere der Halteplatte 19 für die Durchführung des Lichtleitstabs 18 in ihren Abmessungen vermindert wird.

Das Hülsenbauteil 22 fungiert als Abschirmung der Mikrowellenstrahlung, um ein Austreten derselben aus dem Garraum zu verhindern. Das Hülsenbauteil 22 erfüllt somit die Funktion von aus dem Stand der Technik bekannten Gitterstrukturen, die der Öffnung 13 der Garraumwandung 11 zugeordnet sind, wenn klassische Gargeräteleuchten Verwendung finden.

### Bezugszeichenliste

- 10: Anordnung
- 11: Garraumwandung
- 12: Gargeräteleuchte
- 13: Öffnung
- 14: Gewindebohrung
- 15: Fassungsteil
- 16: Anschlussleiter
- 17: Haltekragen
- 18: Lichtleitstab
- 19: Halteplatte
- 20: Durchgangsbohrungen
- 21: Ausnehmung
- 22: Hülsenbauteil
- 23: Auflageflansch
- 24: Befestigungsfuß
- 25: Haltenase
- 26: erste Nietbohrung
- 27: zweite Nietbohrung
- 28: Befestigungsniet
- 29: Befestigungsschrauben
- 30: Elastomerdichtung
- 31: Kühlkörper
- 32: Platine
- 33: LED-Module
- 34: Rastnut
- 35: Rastflügel
- 36: Haltenut
- 37: Befestigungsschlitz

- R: Ringspalt

## Patentansprüche

1. Mikrowellengargerät,
- mit einem Garraum, der von einer Garraumwandung (11) umgrenzt ist,
- mit einer Gargeräteleuchte (12),
- mit einer Öffnung (13) in der Garraumwandung (11), in welcher die Gargeräteleuchte (12) gehalten ist,
- mit einer Abschirmung im Bereich der Öffnung (13), die den Austritt von Mikrowellen aus dem Garraum durch die Öffnung (13) verhindert, wobei
- die Gargeräteleuchte (12) eine LED-Lichtquelle und einen Lichtleitstab (18) aufweist, welcher das von der LED-Lichtquelle emittierte Licht in den Garraum einspeist,
- die Gargeräteleuchte (12) eine Halteplatte (19) aufweist, die mit einer Ausnehmung (21) versehen ist, in welcher der Lichtleitstab (18) der Gargeräteleuchte (12) einsitzt,
- die Halteplatte (19) ein den Lichtleitstab (18) umgebendes Hülsenbauteil (22) hält,
- die Halteplatte (19) die Öffnung (13) abdeckend an der Garraumwandung (11) angeordnet ist,
**dadurch gekennzeichnet, dass**
das Hülsenbauteil (22) als separates Bauteil ausgebildet ist sowie einen Auflageflansch (23) und einen gekröpften Befestigungsfuß (24) aufweist und
die Halteplatte (19) einen Aufnahmeschlitz ausbildet, durch den der Befestigungsfuß (24) des Hülsenbauteils (22) hindurchgeführt ist und auf einer dem Auflageflansch (23) abgewandten Seite die Halteplatte (19) hintergreift.

2. Mikrowellengargerät nach Anspruch 1, **dadurch gekennzeichnet, dass** die Halteplatte (19) ein Dichtelement (30) trägt, welches einen Ringspalt R zwischen Lichtleitstab (18) und Öffnung (13) verschließt.

3. Mikrowellengargerät nach Anspruch 1, **dadurch gekennzeichnet, dass** das Hülsenbauteil (22) ein Dichtelement (30) trägt, welches einen Ringspalt R zwischen Hülsenbauteil (22) und Lichtleitstab (18) verschließt.

4. Mikrowellengargerät nach einem der vorhergehenden Ansprüche, **dadurch gekennzeichnet, dass** das Hülsenbauteil (22) Durchbrechungen in seiner Hülsenwand aufweist und insbesondere als Gitternetzschlauch ausgebildet ist.

## Claims

1. Microwave cooking device,
- having a cooking chamber that is defined by a cooking chamber wall (11),
- having a cooking device light (12),
- having an opening (13) in the cooking chamber wall (11), in which the cooking device light (12) is held,
- having a shield in the area of the opening (13), which prevents microwaves from exiting the cooking chamber via the opening (13), wherein
- the cooking device light (12) has an LED light source and a light guide rod (18), which feeds the light emitted from the LED light source into the cooking chamber,
- the cooking device light (12) has a holding plate (19) that is provided with a recess (21) in which the light guide rod (18) of the cooking device light (12) sits,
- the holding plate (19) holds a sleeve component (22) that surrounds the light guide rod (18),
- the holding plate (19) is arranged so as to cover the opening (13) on the cooking chamber wall (11),
**characterised in that**
the sleeve component (22) is formed as a separate component, and has a support flange (23) and a splayed fastening base (24) and
the holding plate (19) forms a receiving slot, through which the fastening base (24) of the sleeve component (22) is passed and engages behind a side of the holding plate (19) that faces away from the support flange (23).

2. Microwave cooking device according to claim 1, **characterised in that** the holding plate (19) has a sealing element (30), which seals a ring-shaped gap R between the light guide rod (18) and the opening (13).

3. Microwave cooking device according to claim 1, **characterised in that** the sleeve component (22) has a sealing element (30), which seals a ring-shaped gap R between the sleeve component (22) and the light guide rod (18).

4. Microwave cooking device according to one of the preceding claims, **characterised in that** the sleeve component (22) has openings in its sleeve wall and is in particular formed as a mesh tube.

## Revendications

1. Appareil de cuisson à micro-ondes
- avec un espace de cuisson qui est délimité par une paroi d'espace de cuisson (11),
- avec un éclairage d'appareil de cuisson (12),
- avec une ouverture (13) dans la paroi d'espace de cuisson (11) dans laquelle l'éclairage d'appareil de cuisson (12) est fixé,
- avec un blindage dans la région de l'ouverture (13) qui empêche les micro-ondes de sortir de l'espace de cuisson par l'ouverture (13), dans lequel
- l'éclairage d'appareil de cuisson (12) comporte une source lumineuse à DEL et un guide de lumière (18) qui introduit la lumière émise par la source lumineuse à DEL dans l'espace de cuisson,
- l'éclairage d'appareil de cuisson (12) comporte une plaque de maintien (19) qui est dotée d'un évidement (21) dans lequel le guide de lumière (18) de l'éclairage d'appareil de cuisson (12) est inséré,
- la plaque de maintien (19) maintient un élément de manchon (22) entourant le guide de lumière (18) et
- la plaque de maintien (19) est agencée dans la paroi d'espace de cuisson (11) de sorte à couvrir l'ouverture (13),
**caractérisé en ce que**
l'élément de manchon (22) est configuré comme un élément séparé et comporte une bride de support (23) et un pied de fixation coudé (24)
et que
la plaque de maintien (19) forme une fente de réception à travers laquelle le pied de fixation (24) de l'élément de manchon (22) est introduit et agrippe la plaque de maintien (19) sur une face opposée à la bride de support (23).

2. Appareil de cuisson à micro-ondes selon la revendication 1, **caractérisé en ce que** la plaque de maintien (19) porte un élément d'étanchéité (30) qui obture un interstice annulaire R entre le guide de lumière (18) et l'ouverture (13).

3. Appareil de cuisson à micro-ondes selon la revendication 1, **caractérisé en ce que** l'élément de manchon (22) porte un élément d'étanchéité (30) qui obture un interstice annulaire R entre l'élément de manchon (22) et le guide de lumière (18).

4. Appareil de cuisson à micro-ondes selon une des revendications précédentes, **caractérisé en ce que** l'élément de manchon (22) présente des perforations dans sa paroi de manchon et en particulier est configuré comme un tube grillagé.
